# EUROPEAN PATENT SPECIFICATION

(11) **EP 3 229 203 B1**
(45) Date of publication and mention of the grant of the patent: **11.11.2020**
(21) Application number: 15882971.3
(22) Date of filing: 28.02.2015
(51) Int. Cl.: H04L 29/06, G06F 21/30, G06Q 10/08, G06Q 50/26, G06Q 50/28

(54) **INFORMATION PROTECTION METHOD, SERVER AND TERMINAL**
INFORMATIONSSCHUTZVERFAHREN, SERVER UND ENDGERÄT
PROCÉDÉ, SERVEUR ET TERMINAL DE PROTECTION D'INFORMATIONS

(43) Date of publication of application: 11.10.2017
(73) Proprietor: Huawei Technologies Co., Ltd., Longgang District Shenzhen, Guangdong 518129 (CN)
(72) Inventor: LI, Guoyong, Shenzhen, Guangdong 518129 (CN)
(74) Representative: Isarpatent
(86) International application number: PCT/CN2015/073390
(87) International publication number: WO 2016/134533

(56) References cited:
- WO-A1-01/50396
- CN-A- 103 020 309
- CN-A- 103 593 591
- CN-A- 103 593 591
- JP-A- 2005 032 173
- JP-A- 2012 158 468

## Description

### TECHNICAL FIELD

Embodiments of the present invention relate to the field of communications technologies, and in particular, to an information protection method, a server, and a terminal.

### BACKGROUND

With development of Internet technologies, online shopping is increasingly popular. Online shopping gradually replaces a conventional shopping pattern, and an online shopping transaction amount becomes larger.

During online shopping, goods need to be delivered by express, and a delivery address, a name, and a telephone number that are of a user are private information required for express delivery. In a conventional express delivery method, the private information needs to be written on a delivery receipt, and in an express delivery process, each person who comes into contact with a parcel can obtain the private information of the user, resulting in leakage of the private information. Consequently, some lawbreakers perform, by using the private information, an unlawful act such as trafficking, harassment, or fraud.

In the prior art, the user may write a nickname on the delivery receipt, instead of a real name.
However, in the prior art, only the real name of the user can be protected, but private information such as an address and a telephone number of a consignee cannot be protected. The lawbreakers may still perform an unlawful act by using the telephone number and the address of the consignee.
WO 01/50396 A1 discloses a method and system for private shipping to anonymous users purchasing goods on a computer or communications network linking users with merchant web-sites for electronic commerce. A user is issued a proxy identity and the user's mailing address is received and encrypted. The proxy identity and encrypted mailing address are transmitted to a merchant, and decryption information is provided to a shipper. Upon receipt of the encrypted shipping address from the merchant, the shipper can use the decryption information to decrypt the address and generate a package label bearing the true shipping address of the user so that the merchant is prevented from electronically capturing the true identity of the user.
CN 103 593 591 A discloses a user information access control method based on an Role Based Access Control (RBAC) access control model, wherein the user information access control method is applied to electronic commerce. The method includes the following steps that firstly, a safety server records basic information which includes the name and network distribution at all levels and is registered by a logistics sender; secondly, the safety server stores the user information of a transaction side into a database; thirdly, the safety server divides a receipt address in the user information into a plurality of address sectors, designates networks at all levels of the logistics sender as roles, and awards rights that the roles are allowed to have access to the different address sectors to the different roles; fourthly, the safety server sets up a transaction chain, and sends the user information of a receiving side to the logistics sender in the form of bar codes.

### SUMMARY

The present invention is disclosed by an information protection method according to claims 1 and 9, a server according to claim 14, and a terminal according to claim 15. Additional embodiments are defined in the dependent claims.

It can be learned from the foregoing technical solutions that the embodiments of the present invention have the following advantages:

In the embodiments of the present invention, a server receives an address query request sent by a terminal, and determines delivery address information corresponding to the address query request, where the delivery address information includes at least two pieces of hierarchy address information, and wherein express outlet address information is address information of an express outlet to which the terminal belongs. The server determines corresponding target hierarchy address information in the delivery address information according to express outlet address information of the terminal, and sends the target hierarchy address information to the terminal, so that the terminal determines a next delivery destination of goods according to the target hierarchy address information. That is, when querying a delivery address, an express node can obtain only hierarchy address information in the delivery address information, but cannot obtain an entire address. Therefore, the delivery address is not exposed in a process of delivering the goods, and private information of a user is protected.

### BRIEF DESCRIPTION OF DRAWINGS

FIG. 1 is a schematic diagram of an embodiment of an information protection method according to an embodiment of the present invention;
FIG. 2 is a schematic diagram of another embodiment of an information protection method according to an embodiment of the present invention;
FIG. 3 is a schematic diagram of another embodiment of an information protection method according to an embodiment of the present invention; FIG. 4 is a schematic diagram of another embodiment of an information protection method according to an embodiment of the present invention;
FIG. 5 is a schematic diagram of another embodiment of an information protection method according to an embodiment of the present invention;
FIG. 6 is a schematic diagram of another embodiment of an information protection method according to an embodiment of the present invention;
FIG. 7 is a schematic diagram of an embodiment of a server according to an embodiment of the present invention;
FIG. 8 is a schematic diagram of another embodiment of a server according to an embodiment of the present invention;
FIG. 9 is a schematic diagram of another embodiment of a server according to an embodiment of the present invention;
FIG. 10 is a schematic diagram of another embodiment of a server according to an embodiment of the present invention;
FIG. 11 is a schematic diagram of another embodiment of a server according to an embodiment of the present invention;
FIG. 12 is a schematic diagram of an embodiment of a terminal according to an embodiment of the present invention;
FIG. 13 is a schematic diagram of another embodiment of a terminal according to an embodiment of the present invention; and
FIG. 14 is a schematic diagram of another embodiment of a terminal according to an embodiment of the present invention.

### DESCRIPTION OF EMBODIMENTS

Embodiments of the present invention provide an information protection method, a server, and a terminal, to protect private information of a user.

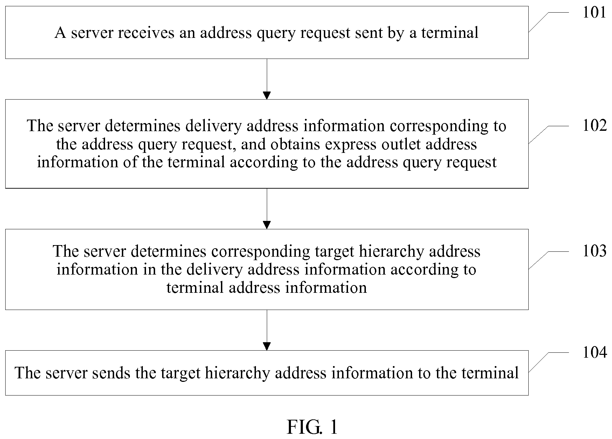

Referring to FIG. 1, an embodiment of an information protection method in an embodiment of the present invention includes the following steps.

101. A server receives an address query request sent by a terminal.

Goods are delivered to an express outlet, a staff member in the outlet sends the address query request to the server by using the terminal, and the server receives the address query request sent by the terminal. The terminal may be a computer or a personal digital assistant (PDA, Personal Digital Assistant) that accesses an express system, or may be another terminal that accesses an express system. This is not specifically limited herein.

102. The server determines delivery address information corresponding to the address query request, and obtains express outlet address information of the terminal according to the address query request.

After receiving the address query request sent by the terminal, the server determines the delivery address information corresponding to the address query request, and parses the address query request to obtain the express outlet address information of the terminal. It should be noted that the delivery address information is a specific address for picking up the goods by a user, the delivery address information includes at least two pieces of hierarchy address information, and the express outlet address information is address information of an express outlet to which the terminal belongs.

103. The server determines corresponding target hierarchy address information in the delivery address information according to the express outlet address information.

After obtaining the express outlet address information, the server determines the corresponding target hierarchy address information in the delivery address information according to the express outlet address information. It should be noted that the target hierarchy address information is address information of one hierarchy in the delivery address information, and is specifically determined according to query permission of the terminal. The query permission of the terminal is closely related to the express outlet address information and the delivery address information.

104. The server sends the target hierarchy address information to the terminal.

After determining the target hierarchy address information, the server sends the target hierarchy address information to the terminal, so that the terminal determines a next delivery destination of the goods according to the target hierarchy address information.

In this embodiment of the present invention, a server receives an address query request sent by a terminal, and determines delivery address information corresponding to the address query request. The delivery address information includes at least two pieces of hierarchy address information. The server determines corresponding target hierarchy address information in the delivery address information according to express outlet address information of the terminal, and sends the target hierarchy address information to the terminal, so that the terminal determines a next delivery destination of goods according to the target hierarchy address information. That is, when querying a delivery address, an express node can obtain only hierarchy address information in the delivery address information, but cannot obtain an entire address. Therefore, the delivery address is not exposed in a process of delivering the goods, and private information of a user is protected.

In the foregoing embodiment, the server may determine the corresponding target hierarchy address information in the delivery address information according to the express outlet address information in multiple manners, and several specific examples are described in detail in the following.

### 1. Express outlet address information includes at least two pieces of hierarchy address information.

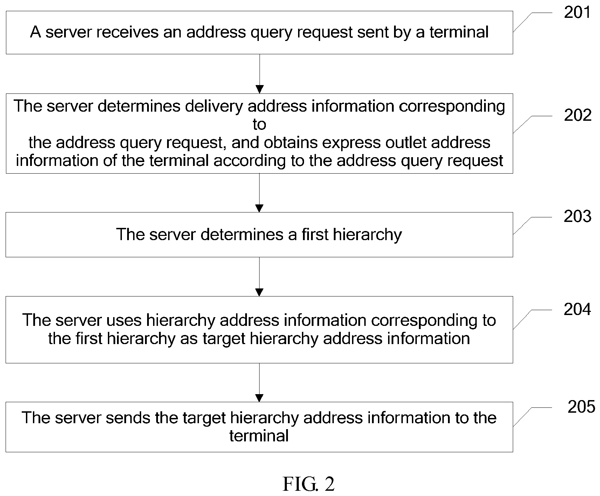

Referring to FIG. 2, another embodiment of an information protection method in an embodiment of the present invention includes the following steps.

201. A server receives an address query request sent by a terminal.

Goods are delivered to an express outlet, a staff member in the outlet sends the address query request to the server by using the terminal, and the server receives the address query request sent by the terminal. The terminal may be a computer or a personal digital assistant (PDA, Personal Digital Assistant) that accesses an express system, or may be another terminal that accesses an express system. This is not specifically limited herein.

It should be noted that the terminal may send the address query request to the server in the following manner:

The terminal sends the address query request to the server according to recognition information on the goods. The recognition information includes a uniform resource locator of delivery address information, account information of a user, a transaction identifier of a user, or a delivery receipt number of a user, and may further include other information. This is not specifically limited herein. The recognition information may be displayed on the goods in a form of a two-dimensional code, or may be displayed in another form. This is not specifically limited herein.

The recognition information may be obtained in the following manner:

The server obtains user information and generates the recognition information according to the user information. The user information may include the delivery address information, a contact identifier, and user identity information, and may further include other information. This is not specifically limited herein. The server may obtain the user information by receiving information entered by the user, may obtain the user information from another server that stores the user information, or may obtain the user information in another manner. This is not specifically limited herein.

In addition to the foregoing manner, the terminal may send the address query request to the server in another manner. This is not specifically limited herein.

202. The server determines delivery address information corresponding to the address query request, and obtains express outlet address information of the terminal according to the address query request.

After receiving the address query request sent by the terminal, the server determines the delivery address information corresponding to the address query request, and obtains the express outlet address information of the terminal according to the address query request. The delivery address information is a specific address for picking up the goods by the user, and includes at least two pieces of hierarchy address information. The express outlet address information is address information of an express outlet to which the terminal belongs, and includes at least two pieces of hierarchy address information. Hierarchy division manners of hierarchy address information differ according to different administrative division manners in different countries. Hierarchy address information may be a national address, a provincial-level address, a municipal-level address, a county-level address, or other address information. This is not specifically limited herein. It should be noted that the server may determine, according to the recognition information on the goods, the delivery address information corresponding to the address query request, and the server may obtain the express outlet address information of the terminal according to the address query request in the following two manners:
1. The server obtains an Internet Protocol (IP, Internet Protocol) address of the terminal that sends the address query request, then determines address information corresponding to the IP address, and uses the address information as the express outlet address information.
2. The terminal sends the express outlet address information to the server in advance; the server stores the express outlet address information, and allocates an account identifier to the terminal; and when the terminal sends the address query request to the server, the server determines the account identifier corresponding to the terminal, and then extracts express outlet address information corresponding to the account identifier.

In addition to the foregoing two manners, the server may obtain the express outlet address information of the terminal in another manner. This is not specifically limited herein.

203. The server determines a first hierarchy.

After obtaining the express outlet address information and the delivery address information, the server determines the first hierarchy, where the first hierarchy is a highest hierarchy of hierarchies in hierarchy address information that is in the express outlet address information and that is different from hierarchy address information in the delivery address information. The server may determine the first hierarchy in the following manner: Hierarchy address information of a same hierarchy in the express outlet address information and the delivery address information is compared, that is, addresses such as provincial-level addresses, municipal-level addresses, and county-level addresses in the two addresses are compared, to obtain a hierarchy corresponding to different address information; and then a highest hierarchy of these different hierarchies is determined, that is, the first hierarchy is determined. The server may determine the first hierarchy in another manner, and this is not specifically limited herein.

204. The server uses hierarchy address information corresponding to the first hierarchy as target hierarchy address information.

The server uses the hierarchy address information that is in the delivery address information and that is corresponding to the first hierarchy as the target hierarchy address information.

205. The server sends the target hierarchy address information to the terminal.

After determining the target hierarchy address information, the server sends the target hierarchy address information to the terminal, so that the terminal determines a next delivery destination of the goods according to the target hierarchy address information.

In this embodiment of the present invention, a server receives an address query request sent by a terminal, and determines delivery address information corresponding to the address query request. The delivery address information includes at least two pieces of hierarchy address information. The server determines corresponding target hierarchy address information in the delivery address information according to express outlet address information of the terminal, and sends the target hierarchy address information to the terminal, so that the terminal determines a next delivery destination of goods according to the target hierarchy address information. That is, when querying a delivery address, an express node can obtain only hierarchy address information in the delivery address information, but cannot obtain an entire address. Therefore, the delivery address is not exposed in a process of delivering the goods, and private information of a user is protected.

Further, this embodiment of the present invention provides a specific manner of determining the target hierarchy address information according to the express outlet address information, to improve feasibility of a solution.

Still further, in this embodiment of the present invention, the server may receive, in multiple manners, the address query request sent by the terminal, and the server may obtain the express outlet address information according to the address query request in multiple manners, thereby improving flexibility of the solution.

### 2. Express outlet address information includes one piece of hierarchy address information.

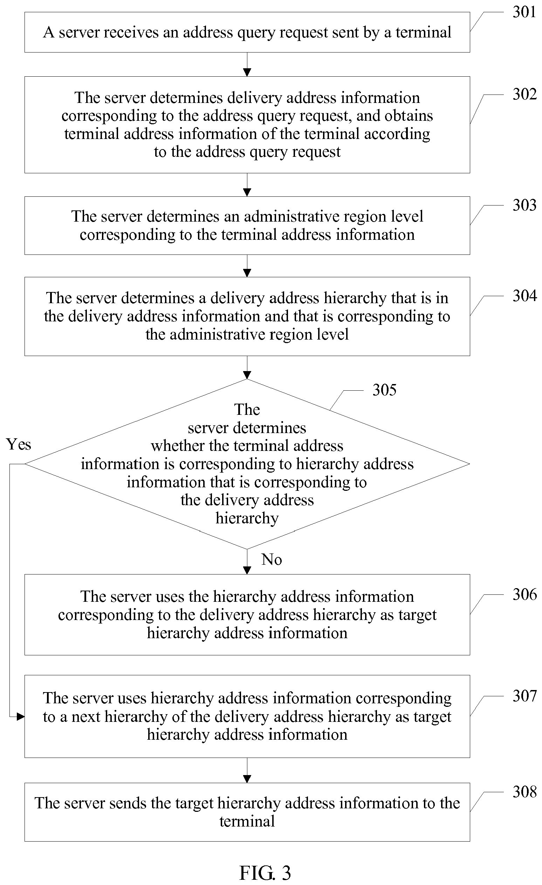

Referring to FIG. 3, another embodiment of an information protection method in an embodiment of the present invention includes the following steps.

301. A server receives an address query request sent by a terminal.

In this embodiment, a process of receiving the address query request by the server is similar to a process of receiving the address query request by the server in step 201 in the foregoing embodiment shown in FIG. 2, and details are not repeatedly described herein.

302. The server determines delivery address information corresponding to the address query request, and obtains express outlet address information of the terminal according to the address query request.

After receiving the address query request sent by the terminal, the server determines the delivery address information corresponding to the address query request, and obtains the express outlet address information of the terminal according to the address query request. The delivery address information is a specific address for picking up the goods by a user, and includes at least two pieces of hierarchy address information. The express outlet address information is address information of an express outlet to which the terminal belongs, and includes one piece of hierarchy address information. A hierarchy in the hierarchy address information is corresponding to an administrative region level, and the administrative region level is a relationship pattern set by a country for hierarchical administration. Different countries have different administrative division manners. In China, a province, an autonomous region, a municipality, and the like are first-level administrative regions; a prefecture, a league, an autonomous prefecture, and the like are second-level administrative regions; a county, a banner, a county-level city, and the like are third-level administrative regions; a township, a town, a subdistrict, and the like are fourth-level administrative regions; a village, a community, a management district, and the like are fifth-level administrative regions; and a village group and a community group are sixth-level administrative regions. That is, hierarchy address information may be a first-level administrative region address, a second-level administrative region address, a third-level administrative region address, or other address information. This is not specifically limited herein.

A manner of obtaining the express outlet address information of the terminal according to the address query request by the server is similar to a manner of obtaining the express outlet address information of the terminal by the server in step 202 in the foregoing embodiment shown in FIG. 2, and details are not repeatedly described herein.

303. The server determines an administrative region level corresponding to the express outlet address information.

After the server obtains the express outlet address information and the delivery address information, the server determines the administrative region level corresponding to the express outlet address information, that is, the server determines a level of an administrative region corresponding to an address that is corresponding to the express outlet address information.

304. The server determines a delivery address hierarchy that is in the delivery address information and that is corresponding to the administrative region level.

The server determines the delivery address hierarchy that is in the delivery address information and that is corresponding to the administrative region level. It should be noted that the delivery address hierarchy is one hierarchy in the delivery address information. For example, if the express outlet address information is a second-level administrative region address "Xiamen City", and the delivery address hierarchy is "Shenzhen University, Yuehai Subdistrict, Nanshan District, Shenzhen City, Guangdong Province", a hierarchy corresponding to a second-level administrative region "Shenzhen City" in the delivery address information is a delivery hierarchy.

305. The server determines whether the express outlet address information is corresponding to hierarchy address information that is corresponding to the delivery address hierarchy; if the express outlet address information is not corresponding to the hierarchy address information that is corresponding to the delivery address hierarchy, performs step 306; and if the express outlet address information is corresponding to the hierarchy address information that is corresponding to the delivery address hierarchy, performs step 307.

The server determines the hierarchy address information corresponding to the delivery address hierarchy, and determines whether the hierarchy address information is corresponding to the express outlet address information. If the hierarchy address information is not corresponding to the express outlet address information, the server performs step 306, and if the hierarchy address information is corresponding to the express outlet address information, the server performs step 307.

It should be noted that it may be determined, in the following manner, whether the hierarchy address information that is corresponding to the delivery hierarchy is corresponding to the express outlet address information: The server determines an address corresponding to the hierarchy address information that is corresponding to the delivery hierarchy, and an address corresponding to the express outlet address information, and determines whether the two addresses are consistent. If the two addresses are consistent, the hierarchy address information that is corresponding to the delivery hierarchy is corresponding to the express outlet address information, and if the two addresses are not consistent, the hierarchy address information that is corresponding to the delivery hierarchy is not corresponding to the express outlet address information. The determining may be performed in another manner, and this is not specifically limited herein.

306. The server uses the hierarchy address information corresponding to the delivery address hierarchy as target hierarchy address information, and performs step 308.

When the server determines that the express outlet address information is not corresponding to the hierarchy address information that is corresponding to the delivery address hierarchy, the server uses the hierarchy address information corresponding to the delivery address hierarchy as the target hierarchy address information.

307. The server uses hierarchy address information corresponding to a next hierarchy of the delivery address hierarchy as target hierarchy address information, and performs step 308.

When the server determines that the express outlet address information is corresponding to the hierarchy address information that is corresponding to the delivery address hierarchy, the server may use the hierarchy address information corresponding to the next hierarchy of the delivery address hierarchy as the target hierarchy address information.

It should be noted that when determining that the express outlet address information is corresponding to the hierarchy address information that is corresponding to the delivery address hierarchy, the server may perform another step instead of this step. This is not specifically limited herein.

308. The server sends the target hierarchy address information to the terminal.

After determining the target hierarchy address information, the server sends the target hierarchy address information to the terminal, so that the terminal determines a next delivery destination of the goods according to the target hierarchy address information.

In this embodiment of the present invention, a server receives an address query request of a terminal, and determines delivery address information corresponding to the address query request. The delivery address information includes at least two pieces of hierarchy address information. The server determines corresponding target hierarchy address information in the delivery address information according to express outlet address information of the terminal, and sends the target hierarchy address information to the terminal, so that the terminal determines a next delivery destination of goods according to the target hierarchy address information. That is, when querying a delivery address, an express node can obtain only hierarchy address information in the delivery address information, but cannot obtain an entire address. Therefore, the delivery address is not exposed in a process of delivering the goods, and private information of a user is protected.

Further, this embodiment of the present invention provides another specific manner of determining the target hierarchy address information according to the express outlet address information, to improve feasibility of a solution.

Still further, in this embodiment of the present invention, the server may receive, in multiple manners, the address query request sent by the terminal, and the server may obtain the express outlet address information according to the address query request in multiple manners, thereby improving flexibility of the solution.

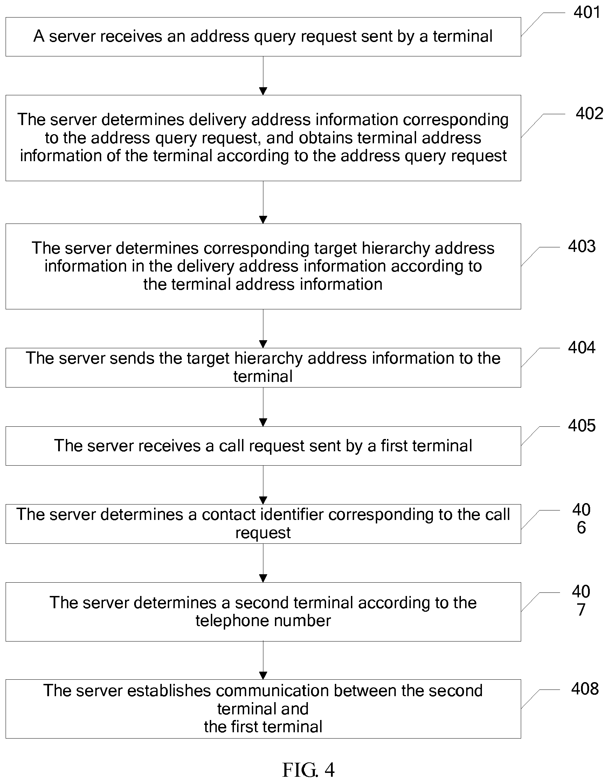

The foregoing embodiments are described from a perspective of delivery address information. However, a telephone number of a user is further required to send a parcel to the user. In the prior art, the telephone number of the user is directly written on a delivery receipt, so that each person who comes into contact with the parcel can obtain the telephone number of the user, resulting in leakage of the telephone number. Consequently, a lawbreaker may perform, by using the telephone number, an unlawful act such as harassment or fraud. Therefore, in addition to delivery address information of the user, the telephone number of the user needs to be protected. Referring to FIG. 4, another embodiment of an information protection method in an embodiment of the present invention includes the following steps.

401. A server receives an address query request sent by a terminal.

In this embodiment, a process of receiving the address query request by the server is similar to a process of receiving the address query request by the server in step 201 in the foregoing embodiment shown in FIG. 2, and details are not repeatedly described herein.

402. The server determines delivery address information corresponding to the address query request, and obtains express outlet address information of the terminal according to the address query request.

After receiving the address query request sent by the terminal, the server determines delivery address information corresponding to the recognition information, and obtains the express outlet address information of the terminal according to the address query request. The delivery address information is a specific address for picking up the goods by a user, and includes at least two pieces of hierarchy address information. The express outlet address information is address information of an express outlet to which the terminal belongs, and may include one or more pieces of hierarchy address information. Hierarchy address information may be a provincial-level address, a municipal-level address, a county-level address, or other address information. This is not specifically limited herein.

A manner of obtaining the express outlet address information of the terminal according to the address query request by the server is similar to a manner of obtaining the express outlet address information of the terminal by the server in step 202 in the foregoing embodiment shown in FIG. 2, and details are not repeatedly described herein.

403. The server determines corresponding target hierarchy address information in the delivery address information according to the express outlet address information.

After obtaining the express outlet address information, the server may determine the target hierarchy address information in the manner shown in steps 203 to 205 in the embodiment in FIG. 2 or in the manner shown in steps 303 to 307 in the embodiment in FIG. 3, or may determine the target hierarchy address information in another manner. This is not specifically limited herein.

404. The server sends the target hierarchy address information to the terminal.

After determining the target hierarchy address information, the server sends the target hierarchy address information to the terminal, so that the terminal determines a next delivery destination of the goods according to the target hierarchy address information.

405. The server receives a call request sent by a first terminal.

When the goods are delivered to a courier, the courier sends the call request to the server by using the first terminal, and the server receives the call request sent by the first terminal. The first terminal may send the call request by using the recognition information, or may send a query request in another manner. This is not specifically limited herein.

406. The server determines a contact identifier corresponding to the call request.

After receiving the call request sent by the first terminal, the server determines the contact identifier corresponding to the call request.

407. The server determines a second terminal according to the contact identifier.

After determining the contact identifier, the server determines the second terminal corresponding to the contact identifier.

408. The server establishes communication between the second terminal and the first terminal.

After determining the second terminal, the server sends a call request to the second terminal. The second terminal receives the request, and the second terminal and the first terminal establish communication.

It should be noted that after receiving the call request sent by the first terminal, the server may further perform the following steps:

The server determines user identity information corresponding to the call request, and sends public information in the user identity information to the first terminal, so that the public information is displayed on the first terminal. The user identity information may include a family name, a first name, or a nickname, and the public information is information that is set by a user corresponding to a user identity and that is allowed to be public.

In this embodiment of the present invention, a server receives an address query request of a terminal, and determines delivery address information corresponding to the address query request. The delivery address information includes at least two pieces of hierarchy address information. The server determines corresponding target hierarchy address information in the delivery address information according to express outlet address information of the terminal, and sends the target hierarchy address information to the terminal, so that the terminal determines a next delivery destination of goods according to the target hierarchy address information. That is, when querying a delivery address, an express node can obtain only a hierarchy address in delivery address information, but cannot obtain an entire address. Therefore, the delivery address is not exposed in a process of delivering the goods, and private information of a user is protected.

Further, in this embodiment of the present invention, the server may receive, in multiple manners, the address query request sent by the terminal, the server may obtain the express outlet address information according to the address query request in multiple manners, and the server may further determine the target hierarchy address information in multiple manners, thereby improving flexibility of a solution.

Still further, in this embodiment of the present invention, the server may receive a call request sent by a first terminal, determine a contact identifier corresponding to the call request, determine a second terminal according to the contact identifier, and then establish communication between the first terminal and the second terminal. That is, when contacting a consignee, a courier can contact the consignee by sending a call request to the server, without a need to obtain a telephone number of the consignee. Therefore, in a process of delivering the goods, a telephone number of the user is not exposed, and the private information of the user is further protected.

Yet further, in this embodiment of the present invention, after receiving the call request, the server determines user identity information corresponding to the call request, and the server sends public information in the user identity information to the first terminal. That is, when the courier and the consignee are in a call, the courier can see, on the terminal according to setting of the consignee, only information that is allowed by the consignee to be public, thereby further protecting the private information of the user.

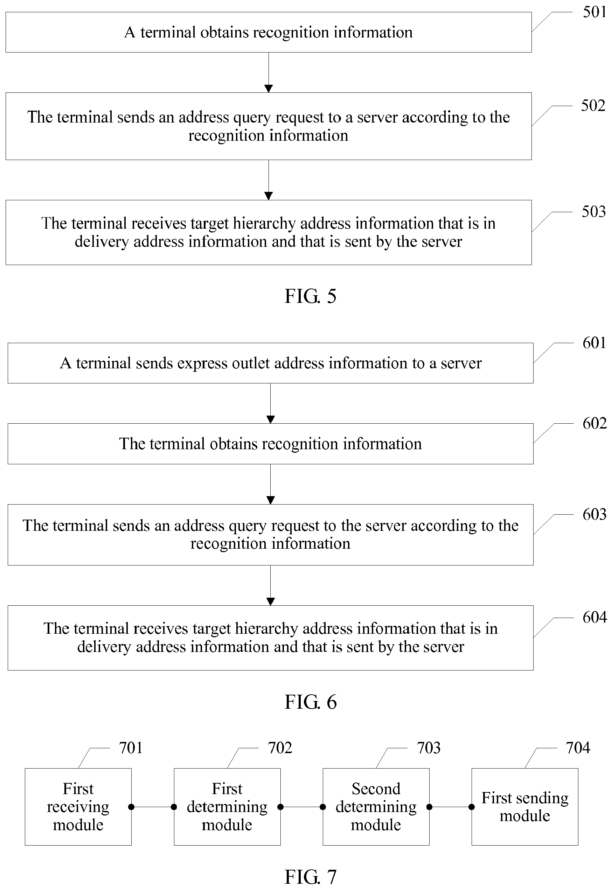

The foregoing describes the information protection method in the embodiments of the present invention from a perspective of a server, and the following describes an information protection method in an embodiment of the present invention from a perspective of a terminal. Referring to FIG. 5, another embodiment of an information protection method in an embodiment of the present invention includes the following steps.

501. A terminal obtains recognition information.

Goods are delivered to an express outlet in which the terminal is located, and the terminal obtains recognition information of the goods. The terminal may be a computer or a PDA that accesses an express system, or may be another terminal that accesses an express system. This is not specifically limited herein.

502. The terminal sends an address query request to a server according to the recognition information.

After obtaining the recognition information, the terminal sends the address query request to the server, so that the server determines delivery address information corresponding to the address query request, obtains express outlet address information of the terminal, and determines corresponding target hierarchy address information in the delivery address information according to the express outlet address information. It should be noted that the delivery address information is a specific address for picking up the goods by a user, the delivery address information includes at least two pieces of hierarchy address information, and the express outlet address information is address information of the express outlet to which the terminal belongs.

503. The terminal receives target hierarchy address information that is in delivery address information and that is sent by the server.

After determining the corresponding target hierarchy address information in the delivery address information, the server sends the target hierarchy address information to the terminal, and the terminal receives the target hierarchy address information that is in the delivery address information and that is sent by the server. It should be noted that the target hierarchy address information is address information of one hierarchy in the delivery address information, and is specifically determined according to query permission of the terminal. The query permission of the terminal is closely related to the express outlet address information and the delivery address information.

In this embodiment of the present invention, a terminal obtains recognition information, and sends an address query request to a server according to the recognition information, so that the server can determine delivery address information corresponding to the address query request, and determine corresponding target hierarchy address information in the delivery address information according to express outlet address information of the terminal. The terminal receives target hierarchy address information that is in delivery address information and that is sent by the server, and may determine a next delivery destination of goods according to the target hierarchy address information. That is, when querying a delivery address, an express node can obtain only hierarchy address information in the delivery address information, but cannot obtain an entire address. Therefore, the delivery address is not exposed in a process of delivering the goods, and private information of a user is protected.

To facilitate understanding, the following describes in detail an information protection method in an embodiment of the present invention from a perspective of a terminal. Referring to FIG. 6, another embodiment of an information protection method in an embodiment of the present invention includes the following steps.

601. A terminal sends express outlet address information to a server.

The terminal sends the express outlet address information to the server, and the server stores the express outlet address information. The express outlet address information is address information of an express outlet to which the terminal belongs, and includes one or more pieces of hierarchy address information. Hierarchy division manners of hierarchy address information differ according to different administrative division manners in different countries. Hierarchy address information may be a provincial-level address, a municipal-level address, a county-level address, or other address information. This is not specifically limited herein. The terminal may be a computer or a PDA that accesses an express system, or may be another terminal that accesses an express system. This is not specifically limited herein.

602. The terminal obtains recognition information.

After the terminal sends the express outlet address information to the server, when goods are delivered to the express outlet in which the terminal is located, the terminal obtains recognition information of the goods. The recognition information includes a uniform resource locator of user information, account information of a user, a transaction identifier of a user, or a delivery receipt number of a user, and may further include other information. This is not specifically limited herein. The terminal may obtain the recognition information in the following manner: The terminal determines the recognition information according to a recognition identifier on the goods. The recognition identifier may be a two-dimensional code, a barcode, or another identifier. This is not specifically limited herein. The terminal may obtain the recognition information in another manner, and this is not specifically limited herein.

603. The terminal sends an address query request to the server according to the recognition information.

After obtaining the recognition information, the terminal sends the address query request to the server according to the recognition information, so that the server determines delivery address information corresponding to the address query request, determines express outlet address information corresponding to the terminal, and determines corresponding target hierarchy address information in the delivery address information according to the express outlet address information. It should be noted that the delivery address information is a specific address for picking up the goods by the user, and the delivery address information includes at least two pieces of hierarchy address information.

604. The terminal receives target hierarchy address information that is in delivery address information and that is sent by the server.

After determining the corresponding target hierarchy address information in the delivery address information, the server sends the target hierarchy address information to the terminal, and the terminal receives the target hierarchy address information that is in the delivery address information and that is sent by the server. It should be noted that the target hierarchy address information is address information of one hierarchy in the delivery address information, and is specifically determined according to query permission of the terminal. The query permission of the terminal is closely related to the express outlet address information and the delivery address information.

In this embodiment of the present invention, a terminal obtains recognition information, and sends an address query request to a server according to the recognition information, so that the server can determine delivery address information corresponding to the address query request, and determine corresponding target hierarchy address information in the delivery address information according to express outlet address information of the terminal. The terminal receives target hierarchy address information that is in delivery address information and that is sent by the server, and may determine a next delivery destination of goods according to the target hierarchy address information. That is, when querying a delivery address, an express node can obtain only hierarchy address information in the delivery address information, but cannot obtain an entire address. Therefore, the delivery address is not exposed in a process of delivering the goods, and private information of a user is protected.

Further, in this embodiment of the present invention, the terminal may send the express outlet address information to the server, so that the server determines the target hierarchy address information according to the express outlet address information. The terminal may obtain the recognition information in multiple manners, and the recognition information may include multiple types of information, thereby improving flexibility of a solution.

To facilitate understanding, the following describes in detail the information protection method in this embodiment of the present invention by using a specific application scenario.

Xiaohong registers an account "candy001" at www.taobao.com, registers, on a user information server, delivery address information "Building B, Haibin Residential Quarter, Yuehai Subdistrict, Nanshan District, Shenzhen City, Guangdong Province", a telephone number "13862106717" as a contact identifier, a family name "Zhang", a first name "Xiaohong", and a nickname "candy", and sets only the nickname to be public. The user information server obtains user information written by Xiaohong, and generates a uniform resource locator "http://buyer.massage.taobao.com" according to the user information.

Express outlets of S.F. Express all over China are registered on the user information server, and a specific address of each node is written.

Xiaohong logs in to the account "candy001" and purchases a pair of pants at a store of a seller, and a transaction identifier is "654313213". The seller prints a two-dimensional code corresponding to this order in a column of express delivery address information by using the user information server, and the two-dimensional code records the uniform resource locator of the user information and account information of Xiaohong. The seller is located at "Fenggang Town, Dongguan City, Guangdong Province", and packs and posts the pants. A courier in S.F. Express delivers the parcel to an S.F. Express outlet A in Fenggang Town, and a staff member in the S.F. Express outlet A scans the two-dimensional code on the parcel by using a computer X, and sends an address query request to the user information server. The user information server receives the address query request, determines that delivery address information corresponding to the two-dimensional code is "Room 402, Building H, Haibin Residential Quarter, Yuehai Subdistrict, Nanshan District, Shenzhen City, Guangdong Province", and determines, according to a registered account of the computer X, that address information of the express outlet A is "No. 001, Shalinglijiao Road, Fenggang Town, Dongguan City, Guangdong Province". Then the user information server compares the two addresses to obtain a target hierarchy address "Shenzhen City", and the user information server sends an address query result "Shenzhen City" to the S.F. Express outlet A. The parcel is delivered to an S.F. Express outlet B in Shenzhen City according to a delivery rule of an express system, and a staff member in the express outlet B scans the two-dimensional code on the parcel by using a computer Y, and sends an address query request to the user information server. The user information server receives the address query request, determines that the delivery address information corresponding to the two-dimensional code is "Building B, Haibin Residential Quarter, Yuehai Subdistrict, Nanshan District, Shenzhen City, Guangdong Province", and determines, according to a registered account of the computer Y, that address information of the express outlet B is "Building A, Haibin Square, Binhe Avenue, Futian District, Shenzhen City, Guangdong Province". Then the user information server compares the two addresses to obtain target hierarchy address information "Nanshan District", and the user information server sends an address query result "Nanshan District" to the express outlet B. The parcel is delivered to an S.F. Express outlet C in Nanshan District according to the delivery rule of the express system, and a staff member in the express outlet C scans the two-dimensional code on the parcel by using a computer Z, and sends an address query request to the user information server. The user information server receives the address query request, determines that the delivery address information corresponding to the two-dimensional code is "Building B, Haibin Residential Quarter, Yuehai Subdistrict, Nanshan District, Shenzhen City, Guangdong Province", and determines, according to a registered account of the computer Z, that address information of the express outlet C is "Building A, Yuehaimen Plaza, Yuehai Subdistrict, Nanshan District, Shenzhen City, Guangdong Province". The user information server determines that a target hierarchy address is "Binhai Residential Quarter", and the user information server sends a query result "Binhai Residential Quarter" to the express outlet C, and the express outlet C arranges a courier to deliver the parcel. The courier scans the two-dimensional code on the parcel by using a mobile phone A, to send a call request to the user information server, and the user information server receives the call request sent by the mobile phone A, and determines that a contact identifier corresponding to the call request is the telephone number "13862106717", and user identity information is "Xiaohong Zhang, candy". The user information server sends a call request to a mobile phone B and sends public information "candy" to the mobile phone A. Xiaohong answers an incoming call by using the mobile phone B, and the mobile phone A and the mobile phone B establishes communication. The courier communicates with Xiaohong and informs Xiaohong that the parcel arrives, and then Xiaohong picks up the parcel.

The foregoing describes the information protection method in the embodiments of the present invention, and the following describes a server in an embodiment of the present invention. Referring to FIG. 7, an embodiment of a server in an embodiment of the present invention includes:
a first receiving module 701, configured to receive an address query request sent by a terminal;
a first determining module 702, configured to: determine delivery address information corresponding to the address query request received by the first receiving module 701, and obtain express outlet address information of the terminal according to the address query request received by the first receiving module 701, where the delivery address information includes at least two pieces of hierarchy address information;
a second determining module 703, configured to determine corresponding target hierarchy address information in the delivery address information according to the express outlet address information obtained by the first determining module 702; and
a first sending module 704, configured to send the target hierarchy address information obtained by the second determining module 703 to the terminal.

In this embodiment of the present invention, a first receiving module 701 receives an address query request of a terminal; a first determining module 702 determines delivery address information corresponding to the address query request. The delivery address information includes at least two pieces of hierarchy address information; a second determining module 703 determines corresponding target hierarchy address information in the delivery address information according to express outlet address information of the terminal; and a first sending module 704 sends the target hierarchy address information to the terminal, so that the terminal determines a next delivery destination of goods according to the target hierarchy address information. That is, when querying a delivery address, an express node can obtain only hierarchy address information in the delivery address information, but cannot obtain an entire address. Therefore, the delivery address is not exposed in a process of delivering the goods, and private information of a user is protected.

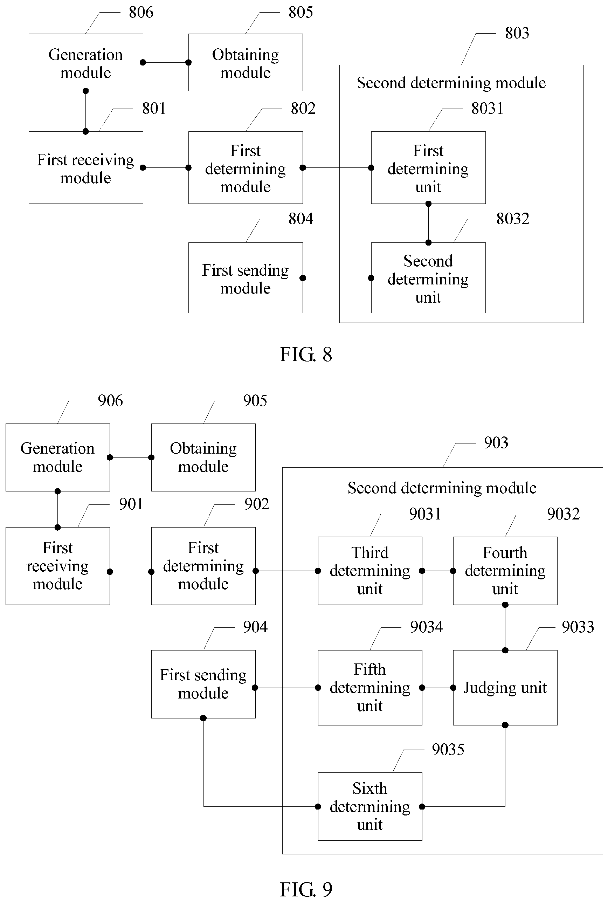

To facilitate understanding, the following describes in detail a server in an embodiment of the present invention. Referring to FIG. 8, another embodiment of a server in an embodiment of the present invention includes:
a first receiving module 801, configured to receive an address query request sent by a terminal;
a first determining module 802, configured to: determine delivery address information corresponding to the address query request received by the first receiving module 801, and obtain express outlet address information of the terminal according to the address query request received by the first receiving module 801, where the delivery address information and the express outlet address information each include at least two pieces of hierarchy address information;
a second determining module 803, configured to determine corresponding target hierarchy address information in the delivery address information according to the express outlet address information obtained by the first determining module 802; and
a first sending module 804, configured to send the target hierarchy address information obtained by the second determining module 803 to the terminal.

The second determining module 803 in this embodiment of the present invention includes:
a first determining unit 8031, configured to determine a first hierarchy, where the first hierarchy is a highest hierarchy of hierarchies in hierarchy address information that is in the express outlet address information and that is different from hierarchy address information in the delivery address information; and
a second determining unit 8032, configured to use, as the target hierarchy address information, hierarchy address information corresponding to the first hierarchy determined by the first determining unit 8031.

The server in this embodiment of the present invention may further include:
an obtaining module 805, configured to obtain user information, where the user information includes delivery address information of a user; and
a generation module 806, configured to generate recognition information according to the user information obtained by the obtaining module, so that the terminal sends the address query request according to the recognition information.

In this embodiment of the present invention, a first receiving module 801 receives an address query request of a terminal; a first determining module 802 determines delivery address information corresponding to the address query request. The delivery address information includes at least two pieces of hierarchy address information; a second determining module 803 determines corresponding target hierarchy address information in the delivery address information according to express outlet address information of the terminal; and a first sending module 804 sends the target hierarchy address information to the terminal, so that the terminal determines a next delivery destination of goods according to the target hierarchy address information. That is, when querying a delivery address, an express node can obtain only hierarchy address information in delivery address information, but cannot obtain an entire address. Therefore, the delivery address is not exposed in a process of delivering the goods, and private information of a user is protected.

Further, this embodiment of the present invention provides a specific implementation manner of determining the target hierarchy address information according to the express outlet address information by the second determining module 803, to improve feasibility of a solution.

Still further, in this embodiment of the present invention, an obtaining module 805 may obtain user information, and a generation module 806 may generate recognition information according to the user information, so that the terminal can send the address query request according to the recognition information, thereby improving flexibility of the solution.

To facilitate understanding, the following describes interaction between modules of the server in this embodiment of the present invention by using a specific application scenario.

Goods are delivered to an express outlet, a staff member in the outlet sends an address query request to a server by using a terminal, and a first receiving module 801 receives the address query request sent by the terminal. The terminal may be a computer or a personal digital assistant (PDA, Personal Digital Assistant) that accesses an express system, or may be another terminal that accesses an express system. This is not specifically limited herein.

It should be noted that the terminal may send the address query request to the server in the following manner:
The terminal sends the address query request to the first receiving module 801 according to recognition information on the goods. The recognition information includes a uniform resource locator of delivery address information, account information of a user, a transaction identifier of a user, or a delivery receipt number of a user, and may further include other information. This is not specifically limited herein. The recognition information may be displayed on the goods in a form of a two-dimensional code, or may be displayed in another form. This is not specifically limited herein.

The recognition information may be obtained in the following manner:
An obtaining module 805 obtains user information and generates the recognition information according to the user information. The user information may include the delivery address information, a contact identifier, and user identity information, and may further include other information. This is not specifically limited herein. The obtaining module 805 may obtain the user information by receiving information entered by the user, may obtain the user information from another server that stores the user information, or may obtain the user information in another manner. This is not specifically limited herein.

In addition to the foregoing manner, the terminal may send the address query request to the server in another manner. This is not specifically limited herein.

After the first receiving module 801 receives the address query request sent by the terminal, a first determining module 802 determines delivery address information corresponding to the address query request, and obtains express outlet address information of the terminal according to the address query request. The delivery address information is a specific address for picking up the goods by the user, and includes at least two pieces of hierarchy address information. The express outlet address information is address information of an express outlet to which the terminal belongs, and includes at least two pieces of hierarchy address information. Hierarchy division manners of hierarchy address information differ according to different administrative division manners in different countries. Hierarchy address information may be a national address, a provincial-level address, a municipal-level address, a county-level address, or other address information. This is not specifically limited herein. It should be noted that the first determining module 802 may determine, according to the recognition information on the goods, the delivery address information corresponding to the address query request, and the first determining module 802 may obtain the express outlet address information of the terminal according to the address query request in the following two manners:
1. The first determining module 802 obtains an Internet Protocol (IP, Internet Protocol) address of the terminal that sends the address query request, then determines address information corresponding to the IP address, and uses the address information as the express outlet address information.
2. The terminal sends the express outlet address information to the server in advance; the server stores the express outlet address information, and allocates an account identifier to the terminal; and when the terminal sends the address query request to the server, the first determining module 802 determines the account identifier corresponding to the terminal, and then extracts express outlet address information corresponding to the account identifier.

In addition to the foregoing two manners, the first determining module 802 may obtain the express outlet address information of the terminal in another manner. This is not specifically limited herein.

After the first determining module 802 obtains the express outlet address information and the delivery address information, a first determining unit 8031 in a second determining module 803 determines a first hierarchy, where the first hierarchy is a highest hierarchy of hierarchies in hierarchy address information that is in the express outlet address information and that is different from hierarchy address information in the delivery address information. The first determining unit 8031 may determine the first hierarchy in the following manner: Hierarchy address information of a same hierarchy in the express outlet address information and the delivery address information is compared, that is, addresses such as provincial-level addresses, municipal-level addresses, and county-level addresses in the two addresses are compared, to obtain a hierarchy corresponding to different address information; and then a highest hierarchy of these different hierarchies is determined, that is, the first hierarchy is determined. The first determining unit 8031 may determine the first hierarchy in another manner, and this is not specifically limited herein.

A second determining unit 8032 uses hierarchy address information that is in the delivery address information and that is corresponding to the first hierarchy as target hierarchy address information.

After the second determining unit 8032 determines the target hierarchy address information, a first sending unit 804 sends the target hierarchy address information to the terminal, so that the terminal determines a next delivery destination of the goods according to the target hierarchy address information.

Referring to FIG. 9, another embodiment of a server in an embodiment of the present invention includes:
a first receiving module 901, configured to receive an address query request sent by a terminal;
a first determining module 902, configured to: determine delivery address information corresponding to the address query request received by the first receiving module 901, and obtain express outlet address information of the terminal according to the address query request received by the first receiving module 901, where the delivery address information includes at least two pieces of hierarchy address information, the express outlet address information includes one piece of hierarchy address information, and a hierarchy in the hierarchy address information is corresponding to an administrative region level;
a second determining module 903, configured to determine corresponding target hierarchy address information in the delivery address information according to the express outlet address information obtained by the first determining module 902; and
a first sending module 904, configured to send the target hierarchy address information obtained by the second determining module 903 to the terminal, so that the terminal determines a next delivery destination of goods according to the target hierarchy address information.

The second determining module 903 in this embodiment of the present invention includes:
a third determining unit 9031, configured to determine an administrative region level corresponding to the express outlet address information;
a fourth determining unit 9032, configured to determine a delivery address hierarchy that is in the delivery address information and that is corresponding to the administrative region level determined by the third determining unit 9031;
a judging unit 9033, configured to determine whether the express outlet address information is corresponding to hierarchy address information that is corresponding to the delivery address hierarchy determined by the fourth determining unit 9032;
a fifth determining unit 9034, configured to: when the judging unit 9033 determines that the express outlet address information is not corresponding to the hierarchy address information that is corresponding to the delivery address hierarchy, use the hierarchy address information corresponding to the delivery address hierarchy as the target hierarchy address information; and
a sixth determining unit 9035, configured to: when the judging unit 9034 determines that the express outlet address information is corresponding to the hierarchy address information that is corresponding to the delivery address hierarchy, use hierarchy address information corresponding to a next hierarchy of the delivery address hierarchy as the target hierarchy address information.

The server in this embodiment of the present invention may further include:
an obtaining module 905, configured to obtain user information, where the user information includes delivery address information of a user; and
a generation module 906, configured to generate recognition information according to the user information obtained by the obtaining module, so that the terminal sends the address query request according to the recognition information.

In this embodiment of the present invention, a first receiving module 901 receives an address query request of a terminal; a first determining module 902 determines delivery address information corresponding to the address query request. The delivery address information includes at least two pieces of hierarchy address information; a second determining module 903 determines corresponding target hierarchy address information in the delivery address information according to express outlet address information of the terminal; and a first sending module 904 sends the target hierarchy address information to the terminal, so that the terminal determines a next delivery destination of goods according to the target hierarchy address information. That is, when querying a delivery address, an express node can obtain only hierarchy address information in delivery address information, but cannot obtain an entire address. Therefore, the delivery address is not exposed in a process of delivering the goods, and private information of a user is protected.

Further, this embodiment of the present invention provides another specific implementation manner of determining the target hierarchy address information according to the express outlet address information by the second determining module 903, to improve feasibility of a solution.

Still further, in this embodiment of the present invention, an obtaining module 905 may obtain user information, and a generation module 906 may generate recognition information according to the user information, so that the terminal can send the address query request according to the recognition information, thereby improving flexibility of the solution.

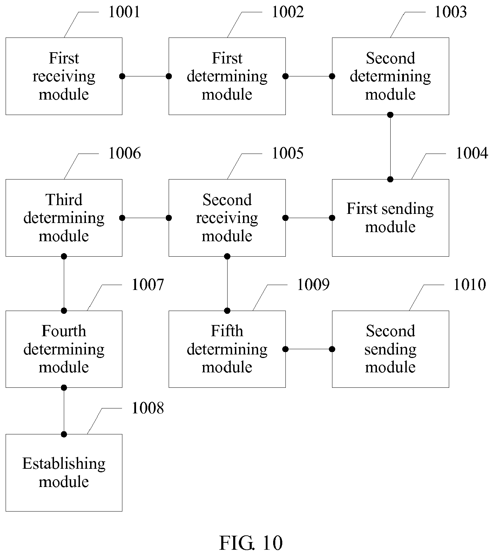

Referring to FIG. 10, another embodiment of a server in an embodiment of the present invention includes:
a first receiving module 1001, configured to receive an address query request sent by a terminal;
a first determining module 1002, configured to: determine delivery address information corresponding to the address query request received by the first receiving module 1001, and obtain express outlet address information of the terminal according to the address query request received by the first receiving module 1001, where the delivery address information includes at least two pieces of hierarchy address information;
a second determining module 1003, configured to determine corresponding target hierarchy address information in the delivery address information according to the express outlet address information obtained by the first determining module 1002;
a first sending module 1004, configured to send the target hierarchy address information obtained by the second determining module 1003 to the terminal, so that the terminal determines a next delivery destination of goods according to the target hierarchy address information;
a second receiving module 1005, configured to receive a call request sent by a first terminal;
a third determining module 1006, configured to determine a contact identifier corresponding to the call request obtained by the second receiving module 1005;
a fourth determining module 1007, configured to determine a second terminal according to the contact identifier determined by the third determining module 1006; and
an establishing module 1008, configured to establish communication between the second terminal determined by the fourth determining module 1007 and the first terminal.

The server in this embodiment of the present invention may further include:
a fifth determining module 1009, configured to determine user identity information corresponding to the call request received by the second receiving module 1005, where the user identity information includes a family name, a first name, or a nickname; and
a second sending module 1010, configured to send public information in the user identity information obtained by the fifth determining module 1009 to the first terminal, where the public information is information that is set by a user and that is allowed to be public, and the user is corresponding to the user identity information.

In this embodiment of the present invention, a first receiving module 1001 receives an address query request of a terminal; a first determining module 1002 determines delivery address information corresponding to the address query request. The delivery address information includes at least two pieces of hierarchy address information; a second determining module 1003 determines corresponding target hierarchy address information in the delivery address information according to express outlet address information of the terminal; and a first sending module 1004 sends the target hierarchy address information to the terminal, so that the terminal determines a next delivery destination of goods according to the target hierarchy address information. That is, when querying a delivery address, an express node can obtain only hierarchy address information in delivery address information, but cannot obtain an entire address. Therefore, the delivery address is not exposed in a process of delivering the goods, and private information of a user is protected.

Further, in this embodiment of the present invention, a second receiving module 1005 may receive a call request sent by a first terminal; a third determining module 1006 determines a contact identifier corresponding to the call request; a fourth determining module 1007 determines a second terminal according to the contact identifier; and an establishing module 1008 establishes communication between the first terminal and the second terminal. That is, when contacting a consignee, a courier can contact the consignee by sending a call request to the server, without a need to obtain a contact identifier of the consignee. Therefore, in a process of delivering the goods, a contact identifier of the user is not exposed, and the private information of the user is further protected.

Still further, in this embodiment of the present invention, after the second receiving module 1005 receives the call request, a fifth determining module 1009 determines user identity information corresponding to the call request, and a second sending module 1010 sends public information in the user identity information to the first terminal. That is, when the courier and the consignee are in a call, the courier can see, on the terminal according to setting of the consignee, only information that is allowed by the consignee to be public, thereby further protecting the private information of the user.

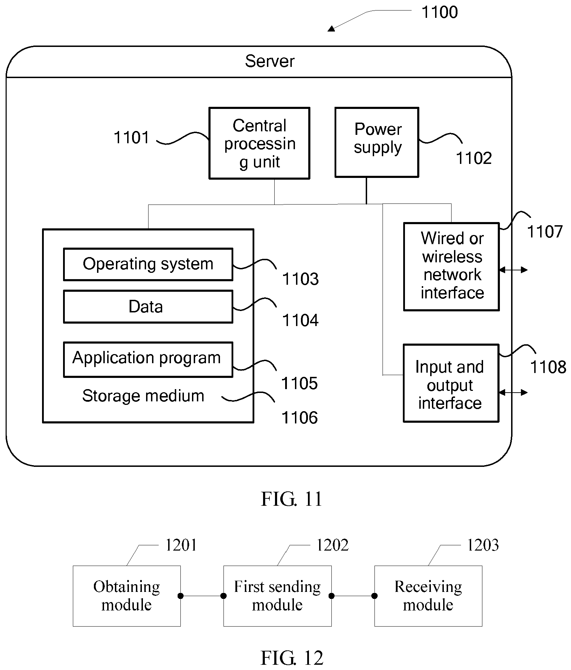

The foregoing describes the server in the embodiments of the present invention from a perspective of a modular functional entity, and the following describes a server in an embodiment of the present invention from a perspective of hardware processing. Referring to FIG. 11, another embodiment of a server in an embodiment of the present invention includes:
a central processing unit 1101, configured to: execute an application program 1105 stored in a storage medium 1106, and invoke data 1104 stored in the storage medium 1106, so as to perform various functions of the server and data processing;
a power supply 1102, configured to supply power to each part, where preferably, the power supply may be logically connected to the central processing unit 1101 by using a power supply management system, so as to implement functions such as charging management, discharging management, and power consumption management by using the power supply management system;
an operating system 1103, configured to manage and control a system resource, where the operating system 1103 may be Windows ServerTM, Mac OS XTM, UnixTM, LinuxTM, or FreeBSDTM, or may be another operating system, and is not specifically limited herein;
the storage medium 1106, configured to temporarily or permanently store the application program 1105 and the data 1104, where the application program 1105 may include one or more modules (which are not marked in the figure), each module may include a series of instruction operations on the server, and the central processing unit 1101 may be set to communicate with the storage medium 1106 and execute a series of instruction operations in the storage medium 1106 on the server 1100;
a wired or wireless network interface 1107, configured to: access a network, and establish communication to a terminal by using the network; and
an input and output interface 1108, configured to connect an input device and an output device.

It should be noted that FIG. 11 is a schematic structural diagram of a server according to an embodiment of the present invention. The server 1100 may have a relative large difference because of different configuration or different performance.

In this embodiment of the present invention, the central processing unit 1101 communicates with the storage medium 1106, and the data 1104 includes delivery address information. By invoking the application program 1105 and the data 1104 that are stored in the storage medium 1106, the central processing unit 1101 performs the following steps:
receiving an address query request sent by the terminal, determining delivery address information corresponding to the address query request, obtaining address information of the terminal according to the address query request, determining corresponding target hierarchy address information in the delivery address information according to express outlet address information, and sending the target hierarchy address information to the terminal, where the delivery address information includes at least two pieces of hierarchy address information.

In another embodiment of the server 1100 in this embodiment of the present invention, the express outlet address information includes at least two pieces of hierarchy address information, and the central processing unit 1101 specifically performs the following steps:
determining a first hierarchy, and using, as the target hierarchy address information, hierarchy address information that is in the delivery address information and that is corresponding to the first hierarchy, where the first hierarchy is a highest hierarchy of hierarchies in hierarchy address information that is in the express outlet address information and that is different from hierarchy address information in the delivery address information.

In another embodiment of the server 1100 in this embodiment of the present invention, the express outlet address information includes one piece of hierarchy address information, the hierarchy address information is corresponding to an administrative region level, and the central processing unit 1101 specifically performs the following steps:
determining an administrative region level corresponding to the express outlet address information, determining a delivery address hierarchy that is in the delivery address information and that is corresponding to the administrative region level, determining whether the express outlet address information is corresponding to hierarchy address information that is corresponding to the delivery address hierarchy, if the express outlet address information is not corresponding to the hierarchy address information that is corresponding to the delivery address hierarchy, using the hierarchy address information corresponding to the delivery address hierarchy as the target hierarchy address information, and if the express outlet address information is corresponding to the hierarchy address information that is corresponding to the delivery address hierarchy, using hierarchy address information corresponding to a next hierarchy of the delivery address hierarchy as the target hierarchy address information.

In another embodiment of the server 1100 in this embodiment of the present invention, the data 1104 further includes a contact identifier, and the central processing unit 1101 further performs the following steps:
receiving a call request sent by a first terminal, determining a contact identifier corresponding to the call request, determining a second terminal according to the contact identifier, and establishing communication between the second terminal and the first terminal.

In another embodiment of the server 1100 in this embodiment of the present invention, the data 1104 further includes user identity information, and the central processing unit 1101 further performs the following steps:
determining user identity information corresponding to the call request, and sending public information in the user identity information to the first terminal, where the public information is information that is set by a user and that is allowed to be public, and the user is corresponding to a user identity.

Steps performed by the server in the foregoing embodiment may be based on a structure of the server shown in FIG. 11.

The foregoing describes the server in the embodiments of the present invention, and the following describes a terminal in an embodiment of the present invention. Referring to FIG. 12, an embodiment of a terminal in an embodiment of the present invention includes:
an obtaining module 1201, configured to obtain recognition information;
a first sending module 1202, configured to send an address query request to a server according to the recognition information, so that the server determines delivery address information corresponding to the address query request, obtains express outlet address information of the terminal, and determines corresponding target hierarchy address information in the delivery address information according to the express outlet address information; and
a receiving module 1203, configured to receive the target hierarchy address information that is in the delivery address information and that is sent by the server, where delivery address information includes at least two pieces of hierarchy address information.

In this embodiment of the present invention, an obtaining module 1201 obtains recognition information; a first sending module 1202 sends an address query request to a server according to the recognition information, so that the server can determine delivery address information corresponding to the address query request, and determine corresponding target hierarchy address information in the delivery address information according to express outlet address information of a terminal; and a receiving module 1203 receives target hierarchy address information that is in delivery address information and that is sent by the server, and may determine a next delivery destination of goods according to the target hierarchy address information. That is, when querying a delivery address, an express node can obtain only hierarchy address information in the delivery address information, but cannot obtain an entire address. Therefore, the delivery address is not exposed in a process of delivering the goods, and private information of a user is protected.

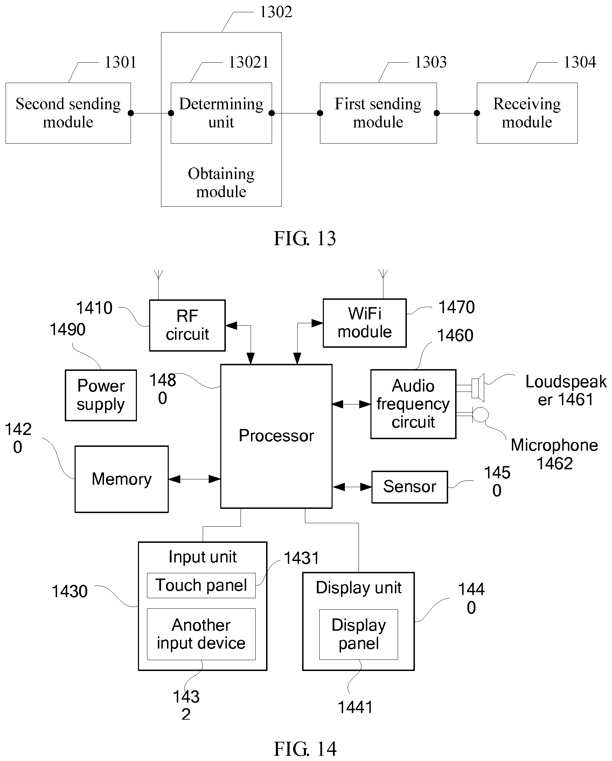

To facilitate understanding, the following describes in detail a terminal in an embodiment of the present invention. Referring to FIG. 13, another embodiment of a terminal in an embodiment of the present invention includes:
a second sending module 1301, configured to send express outlet address information to a server, where the express outlet address information is used to determine target hierarchy address information;
an obtaining module 1302, configured to obtain recognition information;
a first sending module 1303, configured to send an address query request to the server according to the recognition information, so that the server determines delivery address information corresponding to the address query request, obtains express outlet address information of the terminal, and determines corresponding target hierarchy address information in the delivery address information according to the express outlet address information; and
a receiving module 1304, configured to receive the target hierarchy address information that is in the delivery address information and that is sent by the server, where delivery address information includes at least two pieces of hierarchy address information.

In this embodiment of the present invention, the obtaining module 1302 may include:
a determining unit 13021, configured to determine the recognition information according to a recognition identifier.

In this embodiment of the present invention, an obtaining module 1302 obtains recognition information; a first sending module 1303 sends an address query request to a server according to the recognition information, so that the server can determine delivery address information corresponding to the address query request, and determine corresponding target hierarchy address information in the delivery address information according to express outlet address information of a terminal; and a receiving module 1304 receives target hierarchy address information that is in delivery address information and that is sent by the server, and may determine a next delivery destination of goods according to the target hierarchy address information. That is, when querying a delivery address, an express node can obtain only hierarchy address information in the delivery address information, but cannot obtain an entire address. Therefore, the delivery address is not exposed in a process of delivering the goods, and private information of a user is protected.

Further, in this embodiment of the present invention, a second sending module 1301 may send the express outlet address information to the server, so that the server determines the target hierarchy address information according to the express outlet address information, and the obtaining module 1302 may further obtain the recognition information by using a determining unit 13021, thereby improving flexibility of a solution.

To facilitate understanding, the following describes in detail interaction between modules of the terminal in this embodiment of the present invention by using a specific application scenario.

A second sending module 1301 sends express outlet address information to a server, and the server stores the express outlet address information. The express outlet address information is address information of an express outlet to which the terminal belongs, and includes one or more pieces of hierarchy address information. Hierarchy division manners of hierarchy address information differ according to different administrative division manners in different countries. Hierarchy address information may be a provincial-level address, a municipal-level address, a county-level address, or other address information. This is not specifically limited herein. The terminal may be a computer or a PDA that accesses an express system, or may be another terminal that accesses an express system. This is not specifically limited herein.

After the second sending module 1301 sends the express outlet address information to the server, when goods are delivered to the express outlet in which the terminal is located, an obtaining module 1302 obtains recognition information of the goods. The recognition information includes a uniform resource locator of user information, account information of a user, a transaction identifier of a user, or a delivery receipt number of a user, and may further include other information. This is not specifically limited herein. The terminal may obtain the recognition information in the following manner: A determining unit 13021 determines the recognition information according to a recognition identifier on the goods. The recognition identifier may be a two-dimensional code, a barcode, or another identifier. This is not specifically limited herein. The terminal may obtain the recognition information in another manner, and this is not specifically limited herein.

After the obtaining module 1302 obtains the recognition information, a first sending module 1303 sends an address query request to the server according to the recognition information, so that the server determines delivery address information corresponding to the address query request, determines express outlet address information corresponding to the terminal, and determines corresponding target hierarchy address information in the delivery address information according to the express outlet address information. It should be noted that the delivery address information is a specific address for picking up the goods by the user, and the delivery address information includes at least two pieces of hierarchy address information.

After determining the corresponding target hierarchy address information in the delivery address information, the server sends the target hierarchy address information to the terminal, and a receiving module 1304 receives the target hierarchy address information that is in the delivery address information and that is sent by the server. It should be noted that the target hierarchy address information is address information of one hierarchy in the delivery address information, and is specifically determined according to query permission of the terminal. The query permission of the terminal is closely related to the express outlet address information and the delivery address information.

The foregoing describes the terminal in the embodiments of the present invention from a perspective of a modular functional entity. The terminal may be a terminal that access an express system, such as a mobile phone, a tablet computer, or a PDA. The mobile phone is an example of the terminal in the following.

FIG. 14 shows a block diagram of a partial structure of a mobile phone related to a terminal provided in an embodiment of the present invention. Referring to FIG. 14, the mobile phone includes parts such as a radio frequency (Radio Frequency, RF) circuit 1410, a memory 1420, an input unit 1430, a display unit 1440, a sensor 1450, an audio circuit 1460, a wireless fidelity (wireless fidelity, WiFi) module 1470, a processor 1480, and a power supply 1490. Persons skilled in the art may understand that a structure of the mobile phone shown in FIG. 14 constitutes no limitation on the mobile phone. The mobile phone may include more or fewer parts than those shown in the figure, or a combination of some parts, or different part arrangements.

The RF circuit 1410 may be configured to: receive and send a signal in an information receiving and sending process or a call process; particularly, after receiving downlink information of a base station, send the downlink information to the processor 1480 for processing; and send designed uplink data to the base station. Generally, the RF circuit 1410 includes but is not limited to an antenna, at least one amplifier, a transceiver, a coupler, a low noise amplifier (Low Noise Amplifier, LNA), a duplexer, and the like. In addition, the RF circuit 1410 may further communicate with a network and another device by means of wireless communication. The foregoing wireless communication may use any communications standard or protocol, which includes but is not limited to a Global System for Mobile Communications (Global System of Mobile communication, GSM), a general packet radio service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), an email, a short message service (Short Messaging Service, SMS), and the like.

The memory 1420 may be configured to store a software program and a module. The processor 1480 performs various function applications of the mobile phone and data processing by running the software program and the module that are stored in the memory 1420. The memory 1420 may mainly include a program storage area and a data storage area. The program storage area may store an operating system, an application program required by at least one function (such as a voice play function or an image play function), and the like. The data storage area may store data (such as audio data or a phone book) that is created according to use of the mobile phone, and the like. In addition, the memory 1420 may include a high-speed random access memory, and may further include a nonvolatile memory, such as at least one magnetic disk storage component, a flash memory component, or another volatile solid-state storage component.

The input unit 1430 may be configured to: receive input digit or character information, and generate key signal input related to user setting and function control of the mobile phone. Specifically, the input unit 1430 may include a touch panel 1431 and another input device 1432. The touch panel 1431 is also referred to as a touchscreen and can collect a touch operation performed by a user on or near the touch panel 1431 (for example, an operation performed by the user on the touch panel 1431 or near the touch panel 1431 by using any proper object or accessory, such as a finger or a stylus), and drive a corresponding connected apparatus according to a preset program. Optionally, the touch panel 1431 may include two parts: a touch detection apparatus and a touch controller. The touch detection apparatus detects a touch location of the user, detects a signal brought by a touch operation, and sends the signal to the touch controller. The touch controller receives touch information from the touch detection apparatus, converts the touch information into touch point coordinates, then sends the touch point coordinates to the processor 1480, and can receive and execute a command sent by the processor 1480. In addition, the touch panel 1431 may be implemented by using multiple types such as a resistive type, a capacitive type, an infrared ray, and a surface acoustic wave. In addition to the touch panel 1431, the input unit 1430 may include the another input device 1432. Specifically, the another input device 1432 may include but is not limited to one or more of a physical keyboard, a functional key (for example, a volume control key or an on/off key), a trackball, a mouse, an operating lever, and the like.

The display unit 1440 may be configured to display information entered by the user or information provided for the user, and various menus of the mobile phone. The display unit 1440 may include a display panel 1441. Optionally, a form such as a liquid crystal display (Liquid Crystal Display, LCD) or an organic light-emitting diode (Organic Light-Emitting Diode, OLED) may be used to configure the display panel 1441. Further, the touch panel 1431 may cover the display panel 1441. When detecting a touch operation on or near the touch panel 1431, the touch panel 1431 transmits the touch operation to the processor 1480 to determine a type of a touch event, and then the processor 1480 provides corresponding visual output on the display panel 1441 according to the type of the touch event. In FIG. 14, the touch panel 1431 and the display panel 1441 are used as two independent parts to implement input and output functions of the mobile phone. However, in some embodiments, the touch panel 1431 and the display panel 1441 may be integrated to implement the input and output functions of the mobile phone.

The mobile phone may further include at least one sensor 1450, such as a light sensor, a motion sensor, or another sensor. Specifically, the light sensor may include an ambient light sensor and a proximity sensor. The ambient light sensor may adjust luminance of the display panel 1441 according to brightness of ambient light, and the proximity sensor may turn off the display panel 1441 and/or backlight when the mobile phone moves to an ear. As one type of a motion sensor, an accelerometer sensor may detect an acceleration value in each direction (generally, three axes), and may detect a value and a direction of gravity in static mode; and may be used in an application that identifies a mobile phone posture (such as screen switching between portrait and landscape modes, a related game, and magnetometer posture calibration), a function related to vibration identification (such as a pedometer and a knock), and the like. Other sensors such as a gyroscope, a barometer, a hygrometer, a thermometer, and an infrared ray sensor may be disposed on the mobile phone, and details are not described herein.

The audio circuit 1460, a loudspeaker 1461, and a microphone 1462 may provide an audio interface between the user and the mobile phone. The audio frequency circuit 1460 may transmit, to the loudspeaker 1461, an electrical signal converted from received audio data, and the loudspeaker 1461 converts the electrical signal to a sound signal for output. In addition, the microphone 1462 converts a collected sound signal into an electrical signal, and the audio circuit 14460 receives the electrical signal, converts the electrical signal into audio data, and outputs the audio data to the processor 1480 for processing. Then the audio data is sent to, for example, another mobile phone, by using the RF circuit 1410, or the audio data is output to the memory 1420 for further processing.

WiFi belongs to a short-distance wireless transmission technology. The mobile phone may help, by using the WiFi module 1470, the user to send and receive an email, browse a web page, access streaming media, and the like. The WiFi module 1470 provides wireless broadband Internet access for the user. Although the WiFi module 1470 is shown in FIG. 14, it should be understood that the WiFi module 1407 is not a mandatory part of the mobile phone, and may completely be omitted according to a need without changing the essence of the present invention.

The processor 1480 is a control center of the mobile phone, is connected to each part of the entire mobile phone by using various interfaces and lines, and performs various functions of the mobile phone and data processing by running or executing the software program and/or the module that are/is stored in the memory 1420 and by invoking data stored in the memory 1420, so as to perform overall monitoring on the mobile phone. Optionally, the processor 1480 may include one or more processing units. Preferably, an application processor and a modem processor may be integrated into the processor 1480, where the application processor mainly processes an operating system, a user interface, an application program, and the like; and the modem processor mainly processes wireless communication. It may be understood that the foregoing modem processor may not be integrated into the processor 1480.

The mobile phone further includes the power supply 1490 (such as a battery) that supplies power to each part. Preferably, the power supply may be logically connected to the processor 1480 by using a power management system, so as to implement functions such as charging management, discharging management, and power consumption management by using the power supply management system.

Although not shown, the mobile phone may further include a camera, a Bluetooth module, and the like, and details are not described herein.

In this embodiment of the present invention, the processor 1480 included in the terminal specifically performs the following steps:
The processor 1480 obtains recognition information, and sends an address query request to a server according to the recognition information, so that the server determines delivery address information corresponding to the address query request, obtains express outlet address information of the terminal, and determines corresponding target hierarchy address information in the delivery address information according to the express outlet address information; and the processor receives the target hierarchy address information that is in the delivery address information and that is sent by the server, where delivery address information includes at least two pieces of hierarchy address information.

The display unit 1440 specifically performs the following step: displaying the target hierarchy address information received by the processor 1402.

In another embodiment of the terminal in this embodiment of the present invention, the processor further performs the following step: sending the express outlet address information to the server, where the express outlet address information is used to determine a target hierarchy address.

In another embodiment of the terminal in this embodiment of the present invention, the input unit specifically performs the following step: receiving an input recognition identifier; and
the processor further specifically performs the following step: determining the recognition information according to the recognition identifier.

It may be clearly understood by persons skilled in the art that, for the purpose of convenient and brief description, for a detailed working process of the foregoing system, apparatus, and unit, refer to a corresponding process in the foregoing method embodiments. Details are not described herein.

In the several embodiments provided in this application, it should be understood that the disclosed system, apparatus, and method may be implemented in other manners. For example, the foregoing described apparatus embodiment is merely an example. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on multiple network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The foregoing integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the claims.

## Claims

1. An information protection method, comprising:
receiving (101), by a server, an address query request sent by a terminal;
determining (102), by the server, delivery address information corresponding to the address query request, and obtaining express outlet address information of the terminal according to the address query request, wherein the delivery address information comprises at least two pieces of hierarchy address information, and wherein the express outlet address information is address information of an express outlet to which the terminal belongs;
determining (103), by the server, corresponding target hierarchy address information in the delivery address information according to the express outlet address information; and
sending (104), by the server, the target hierarchy address information to the terminal.

2. The method according to claim 1, wherein the express outlet address information comprises at least two pieces of hierarchy address information; and
the determining (103), by the server, corresponding target hierarchy address information in the delivery address information according to the express outlet address information comprises:
determining (203), by the server, a first hierarchy, wherein the first hierarchy is a highest hierarchy of hierarchies in hierarchy address information that is in the express outlet address information and that is different from hierarchy address information in the delivery address information; and
using (204), by the server, hierarchy address information corresponding to the first hierarchy as the target hierarchy address information.

3. The method according to claim 1, wherein the express outlet address information comprises one piece of hierarchy address information, and a hierarchy in the hierarchy address information is corresponding to an administrative region level; and
the determining (103), by the server, corresponding target hierarchy address information in the delivery address information according to the express outlet address information comprises:
determining (303), by the server, an administrative region level corresponding to the express outlet address information;
determining (304), by the server, a delivery address hierarchy that is in the delivery address information and that is corresponding to the administrative region level;
determining (305), by the server, whether the express outlet address information is corresponding to hierarchy address information that is corresponding to the delivery address hierarchy; and
if the express outlet address information is not corresponding to the hierarchy address information that is corresponding to the delivery address hierarchy, using (306), by the server, the hierarchy address information corresponding to the delivery address hierarchy as the target hierarchy address information.

4. The method according to claim 3, wherein the method further comprises:
if the express outlet address information is corresponding to the hierarchy address information that is corresponding to the delivery address hierarchy, using (307), by the server, hierarchy address information corresponding to a next hierarchy of the delivery address hierarchy as the target hierarchy address information.

5. The method according to any one of claims 1 to 4, wherein the method further comprises:
receiving (405), by the server, a call request sent by a first terminal;
determining (406), by the server, a contact identifier corresponding to the call request;
determining (407), by the server, a second terminal according to the contact identifier; and
establishing (408), by the server, communication between the second terminal and the first terminal.

6. The method according to claim 5, wherein after the receiving (405), by the server, a call request sent by a first terminal, the method comprises:
determining, by the server, user identity information corresponding to the call request, wherein the user identity information comprises a family name, a first name, or a nickname; and
sending, by the server, public information in the user identity information to the first terminal, wherein the public information is information that is set by a user and that is allowed to be public, and the user is corresponding to the user identity information.

7. The method according to any one of claims 1 to 4, wherein before the receiving (101), by a server, an address query request sent by a terminal, the method comprises:
obtaining, by the server, user information, wherein the user information comprises delivery address information of the user; and
generating, by the server, recognition information according to the user information, so that the terminal sends the address query request according to the recognition information.

8. The method according to claim 7, wherein the recognition information comprises a uniform resource locator of the user information, account information of the user, a transaction identifier of the user, or a delivery receipt number of the user.

9. An information protection method, comprising:
obtaining (501), by a terminal, recognition information;
sending (502), by the terminal, an address query request to a server according to the recognition information, so that the server determines delivery address information corresponding to the address query request, obtains express outlet address information of the terminal, and determines corresponding target hierarchy address information in the delivery address information according to the express outlet address information, wherein the express outlet address information is address information of an express outlet to which the terminal belongs; and
receiving (503), by the terminal, the target hierarchy address information that is in the delivery address information and that is sent by the server, wherein the delivery address information comprises at least two pieces of hierarchy address information.

10. The method according to claim 9, wherein before the sending (502), by the terminal, an address query request to a server according to the recognition information, the method comprises:
sending (601), by the terminal, the express outlet address information to the server, wherein the express outlet address information is used to determine the target hierarchy address information.

11. The method according to claim 10, wherein the obtaining (501), by a terminal, recognition information comprises:
determining, by the terminal, the recognition information according to a recognition identifier.

12. The method according to claim 11, wherein the recognition identifier is a two-dimensional code or a barcode.

13. The method according to any one of claims 9 to 12, wherein the recognition information comprises a uniform resource locator of user information, account information of the user, a transaction identifier of the user, or a delivery receipt number of the user.

14. A server, comprising:
a first receiving module, configured to receive an address query request sent by a terminal;
a first determining module (702), configured to: determine delivery address information corresponding to the address query request received by the first receiving module, and obtain express outlet address information of the terminal according to the address query request received by the first receiving module, wherein the delivery address information comprises at least two pieces of hierarchy address information, and wherein the express outlet address information is address information of an express outlet to which the terminal belongs;
a second determining module (703), configured to determine corresponding target hierarchy address information in the delivery address information according to the express outlet address information obtained by the first determining module; and
a first sending module (704), configured to send the target hierarchy address information obtained by the second determining module to the terminal.

15. A terminal, comprising:
an obtaining module (805), configured to obtain recognition information;
a first sending module (804), configured to send an address query request to a server according to the recognition information, so that the server determines delivery address information corresponding to the address query request, obtains express outlet address information of the terminal, and determines corresponding target hierarchy address information in the delivery address information according to the express outlet address information, wherein the express outlet address information is address information of an express outlet to which the terminal belongs; and
a receiving module (801), configured to receive the target hierarchy address information that is in the delivery address information and that is sent by the server, wherein the delivery address information comprises at least two pieces of hierarchy address information.

## Patentansprüche

1. Informationsschutzverfahren, umfassend:
Empfangen (101), durch einen Server, einer Adressabfrageanforderung, die durch ein Endgerät gesendet wird;
Bestimmen (102), durch den Server, von Zustelladressinformationen, die der Adressabfrageanforderung entsprechen, und Erhalten von Schnellausgangsadressinformationen des Endgeräts gemäß der Adressabfrageanforderung, wobei die Zustelladressinformationen mindestens zwei Hierarchieadressinformationen umfassen, und wobei die Schnellausgangsadressinformationen Adressinformationen eines Schnellausgangs sind, zu dem das Endgerät gehört;
Bestimmen (103), durch den Server, entsprechender Zielhierarchieadressinformationen in den Zustelladressinformationen gemäß den Schnellausgangsadressinformationen; und
Senden (104), durch den Server, der Zielhierarchieadressinformationen an das Endgerät.

2. Verfahren nach Anspruch 1, wobei die Schnellausgangsadressinformationen mindestens zwei Hierarchieadressinformationen umfassen; und
das Bestimmen (103), durch den Server, der entsprechenden Zielhierarchieadressinformationen in den Zustelladressinformationen gemäß den Schnellausgangsadressinformationen umfasst:
Bestimmen (203), durch den Server, einer ersten Hierarchie, wobei die erste Hierarchie eine höchste Hierarchie von Hierarchien in Hierarchieadressinformationen ist, die in den Schnellausgangsadressinformationen enthalten sind und die sich von Hierarchieadressinformationen in den Zustelladressinformationen unterscheiden; und
Verwenden (204), durch den Server, von Hierarchieadressinformationen, die der ersten Hierarchie entsprechen, als Zielhierarchieadressinformationen.

3. Verfahren nach Anspruch 1, wobei die Schnellausgangsadressinformationen eine Hierarchieadressinformation umfassen und eine Hierarchie in den Hierarchieadressinformation einer Verwaltungsregionsebene entspricht; und
das Bestimmen (103), durch den Server, der entsprechenden Zielhierarchieadressinformationen in den Zustelladressinformationen gemäß den Schnellausgangsadressinformationen umfasst:
Bestimmen (303), durch den Server, einer Verwaltungsregionsebene, die den Schnellausgangsadressinformationen entspricht;
Bestimmen (304), durch den Server, einer Zustelladresshierarchie, die in den Zustelladressinformationen enthalten ist und der Verwaltungsregionsebene entspricht;
Bestimmen (305), durch den Server, ob die Schnellausgangsadressinformationen Hierarchieadressinformationen entsprechen, die der Zustelladresshierarchie entsprechen;
und
wenn die Schnellausgangsadressinformationen nicht den Hierarchieadressinformationen entsprechen, die der Zustelladresshierarchie entsprechen, Verwenden (306), durch den Server, der Hierarchieadressinformationen, die der Zustelladresshierarchie entsprechen, als Zielhierarchieadressinformationen.

4. Verfahren nach Anspruch 3, wobei das Verfahren ferner umfasst:
wenn die Schnellausgangsadressinformationen den Hierarchieadressinformationen entsprechen, die der Zustelladresshierarchie entsprechen, Verwenden (307), durch den Server, von Hierarchieadressinformationen, die einer nächsten Hierarchie der Zustelladresshierarchie entsprechen, als Zielhierarchieadressinformationen.

5. Verfahren nach einem der Ansprüche 1 bis 4, wobei das Verfahren ferner umfasst:
Empfangen (405), durch den Server, einer Anrufanforderung, die durch ein erstes Endgerät gesendet wird;
Bestimmen (406), durch den Server, einer Kontaktkennung, die der Anrufanforderung entspricht;
Bestimmen (407), durch den Server, eines zweiten Endgeräts gemäß der Kontaktkennung; und
Herstellen (408), durch den Server, der Kommunikation zwischen dem zweiten Endgerät und dem ersten Endgerät.

6. Verfahren nach Anspruch 5, wobei nach dem Empfangen (405), durch den Server, einer Anrufanforderung, die durch ein erstes Endgerät gesendet wird, das Verfahren umfasst:
Bestimmen, durch den Server, von Benutzeridentitätsinformationen, die der Anrufanforderung entsprechen, wobei die Benutzeridentitätsinformationen einen Familiennamen, einen Vornamen oder ein Alias umfassen; und
Senden, durch den Server, von öffentlichen Informationen in den Benutzeridentitätsinformationen an das erste Endgerät, wobei die öffentlichen Informationen Informationen sind, die durch einen Benutzer festgelegt werden und die öffentlich sein darf, und der Benutzer den Benutzeridentitätsinformationen entspricht.

7. Verfahren nach einem der Ansprüche 1 bis 4, wobei vor dem Empfangen (101), durch einen Server, einer Adressabfrageanforderung, die durch ein Endgerät gesendet wird, das Verfahren umfasst:
Erhalten, durch den Server, von Benutzerinformationen, wobei die Benutzerinformationen Zustelladressinformationen des Benutzers umfassen; und
Erzeugen, durch den Server, von Erkennungsinformationen gemäß den Benutzerinformationen, so dass das Endgerät die Adressabfrageanforderung gemäß den Erkennungsinformationen sendet.

8. Verfahren nach Anspruch 7, wobei die Erkennungsinformationen einen einheitlichen Ressourcenlokalisierer der Benutzerinformationen, Kontoinformationen des Benutzers, eine Transaktionskennung des Benutzers oder eine Zustellbestätigungsnummer des Benutzers umfassen.

9. Informationsschutzverfahren, umfassend:
Erhalten (501), durch ein Endgerät, von Erkennungsinformationen;
Senden (502), durch das Endgerät, einer Adressabfrageanforderung an einen Server gemäß den Erkennungsinformationen, so dass der Server Zustelladressinformationen bestimmt, die der Adressabfrageanforderung entsprechen, Schnellausgangsadressinformationen des Endgeräts erhält und die entsprechenden Zielhierarchieadressinformationen in den Zustelladressinformationen gemäß den Schnellausgangsadressinformationen bestimmt, wobei die Schnellausgangsadressinformationen Adressinformationen eines Schnellausgangs sind zu dem das Endgerät gehört, und
Empfangen (503), durch das Endgerät, der Zielhierarchieadressinformationen, die in den Zustelladressinformationen enthalten sind und die durch den Server gesendet werden, wobei die Zustelladressinformationen mindestens zwei Hierarchieadressinformationen umfassen.

10. Verfahren nach Anspruch 9, wobei vor dem Senden (502), durch das Endgerät, einer Adressabfrageanforderung an einen Server gemäß den Erkennungsinformationen das Verfahren umfasst:
Senden (601), durch das Endgerät, der Schnellausgangsadressinformationen an den Server, wobei die Schnellausgangsadressinformationen verwendet werden, um die Zielhierarchieadressinformationen zu bestimmen.

11. Verfahren nach Anspruch 10, wobei das Erhalten (501), durch ein Endgerät, von Erkennungsinformationen, umfasst:
Bestimmen, durch das Endgerät, der Erkennungsinformationen gemäß einer Erkennungskennung.

12. Verfahren nach Anspruch 11, wobei die Erkennungskennung ein zweidimensionaler Code oder ein Barcode ist.

13. Verfahren nach einem der Ansprüche 9 bis 12, wobei die Erkennungsinformationen einen einheitlichen Ressourcenlokalisierer für Benutzerinformationen, Kontoinformationen des Benutzers, eine Transaktionskennung des Benutzers oder eine Zustellbestätigungsnummer des Benutzers umfassen.

14. Server, umfassend:
ein erstes Empfangsmodul, das konfiguriert ist, um eine Adressabfrageanforderung, die durch ein Endgerät gesendet wird, zu empfangen;
ein erstes Bestimmungsmodul (702), das konfiguriert zum:
Bestimmen von Zustelladressinformationen, die der Adressabfrageanforderung entsprechen, die durch das erste Empfangsmodul empfangen werden, und Erhalten von Schnellausgangsadressinformationen des Endgeräts gemäß der Adressabfrageanforderung, die durch das Empfangsmodul empfangen wird, wobei die Zustelladressinformationen mindestens zwei Hierarchieadressinformationen umfassen, und wobei die Schnellausgangsadressinformationen Adressinformationen eines Schnellausgangs sind zu dem das Endgerät gehört;
ein zweites Bestimmungsmodul (703), das konfiguriert ist, um entsprechende Zielhierarchieadressinformationen in den Zustelladressinformationen gemäß den Schnellausgangsadressinformationen zu bestimmen, die durch das erste Bestimmungsmodul erhalten werden; und
ein erstes Sendemodul (704), das konfiguriert ist, um die Zielhierarchieadressinformationen, die durch das zweite Bestimmungsmodul erhaltenen werden, an das Endgerät zu senden.

15. Endgerät, umfassend:
ein Erhaltensmodul (805), das konfiguriert ist, um Erkennungsinformationen zu erhalten;
ein erstes Sendemodul (804), das konfiguriert ist, um eine Adressabfrageanforderung gemäß den Erkennungsinformationen an einen Server zu senden, so dass der Server Zustelladressinformationen bestimmt, die der Adressabfrageanforderung entsprechen, Schnellausgangsadressinformationen des Endgeräts erhält und entsprechende Zielhierarchieadressinformationen in den Zustelladressinformationen gemäß den Schnellausgangsadressinformationen bestimmt, wobei die Schnellausgangsadressinformationen Adressinformationen eines Schnellausgangs sind zu dem das Endgerät gehört; und
ein Empfangsmodul (801), das konfiguriert ist, um die Zielhierarchieadressinformationen zu empfangen, die in den Zustelladressinformationen enthalten sind und die durch den Server gesendet werden, wobei die Zustelladressinformationen mindestens zwei Hierarchieadressinformationen umfassen.

## Revendications

1. Procédé de protection des informations, comprenant :
la réception (101), par un serveur, d'une demande de requête d'adresse envoyée par un terminal ;
la détermination (102), par le serveur, des informations d'adresse de livraison correspondant à la demande de requête d'adresse et l'obtention des informations d'adresse de sortie express du terminal selon la demande de requête d'adresse, les informations d'adresse de livraison comprenant au moins deux éléments d'informations d'adresse de hiérarchie et les informations d'adresse de sortie express étant des informations d'adresse d'une sortie express à laquelle appartient le terminal ;
la détermination (103), par le serveur, des informations d'adresse de hiérarchie cible correspondantes dans les informations d'adresse de livraison selon les informations d'adresse de sortie express ; et
l'envoi (104), par le serveur, des informations d'adresse de hiérarchie cible au terminal.

2. Procédé selon la revendication 1, dans lequel les informations d'adresse de sortie express comprennent au moins deux éléments d'informations d'adresse de hiérarchie ; et
la détermination (103), par le serveur, des informations d'adresse de hiérarchie cible correspondantes dans les informations d'adresse de livraison selon les informations d'adresse de sortie express comprend :
la détermination (203), par le serveur, d'une première hiérarchie, la première hiérarchie étant une hiérarchie la plus élevée de hiérarchies dans les informations d'adresse de hiérarchie qui sont dans les informations d'adresse de sortie express et qui sont différentes des informations d'adresse de hiérarchie dans les informations d'adresse de livraison ; et
l'utilisation (204), par le serveur, des informations d'adresse de hiérarchie correspondant à la première hiérarchie comme informations d'adresse de hiérarchie cible.

3. Procédé selon la revendication 1, dans lequel les informations d'adresse de sortie express comprennent un élément d'informations d'adresse de hiérarchie et une hiérarchie dans les informations d'adresse de hiérarchie correspond à un niveau de région administrative ; et
la détermination (103), par le serveur, des informations d'adresse de hiérarchie cible correspondantes dans les informations d'adresse de livraison selon les informations d'adresse de sortie express comprend :
la détermination (303), par le serveur, d'un niveau de région administrative correspondant aux informations d'adresse de sortie express ;
la détermination (304), par le serveur, d'une hiérarchie d'adresses de livraison qui se trouve dans les informations d'adresse de livraison et qui correspond au niveau de région administrative ;
le fait de déterminer (305), par le serveur, si les informations d'adresse de sortie express correspondent à des informations d'adresse de hiérarchie qui correspondent à la hiérarchie d'adresses de livraison ; et
si les informations d'adresse de sortie express ne correspondent pas aux informations d'adresse de hiérarchie qui correspondent à la hiérarchie d'adresses de livraison, l'utilisation (306), par le serveur, des informations d'adresse de hiérarchie correspondant à la hiérarchie d'adresses de livraison en tant qu'informations d'adresse de hiérarchie cible.

4. Procédé selon la revendication 3, dans lequel le procédé comprend en outre :
si les informations d'adresse de sortie express correspondent aux informations d'adresse de hiérarchie qui correspondent à la hiérarchie d'adresses de livraison, l'utilisation (307), par le serveur, des informations d'adresse de hiérarchie correspondant à une hiérarchie suivante de la hiérarchie d'adresses de livraison en tant qu'informations d'adresse de hiérarchie cible.

5. Procédé selon l'une quelconque des revendications 1 à 4, dans lequel le procédé comprend en outre :
la réception (405), par le serveur, d'une demande d'appel envoyée par un premier terminal ;
la détermination (406), par le serveur, d'un identifiant de contact correspondant à la demande d'appel ;
la détermination (407), par le serveur, d'un second terminal selon l'identifiant de contact ; et
l'établissement (408), par le serveur, d'une communication entre le second terminal et le premier terminal.

6. Procédé selon la revendication 5, dans lequel après la réception (405), par le serveur, d'une demande d'appel envoyée par un premier terminal, le procédé comprend :
la détermination, par le serveur, des informations d'identité d'utilisateur correspondant à la demande d'appel, les informations d'identité d'utilisateur comprenant un nom de famille, un prénom ou un surnom ; et
l'envoi, par le serveur, des informations publiques dans les informations d'identité d'utilisateur au premier terminal, les informations publiques étant des informations définies par un utilisateur et autorisées à être publiques et l'utilisateur correspondant aux informations d'identité d'utilisateur.

7. Procédé selon l'une quelconque des revendications 1 à 4, dans lequel avant la réception (101), par un serveur, d'une demande de requête d'adresse envoyée par un terminal, le procédé comprend :
l'obtention, par le serveur, des informations d'utilisateur, les informations d'utilisateur comprenant des informations d'adresse de livraison de l'utilisateur ; et
la génération, par le serveur, des informations de reconnaissance selon les informations d'utilisateur, de manière à ce que le terminal envoie la demande de requête d'adresse selon les informations de reconnaissance.

8. Procédé selon la revendication 7, dans lequel les informations de reconnaissance comprennent un localisateur de ressources uniforme des informations d'utilisateur, des informations de compte de l'utilisateur, un identifiant de transaction de l'utilisateur ou un numéro de reçu de livraison de l'utilisateur.

9. Procédé de protection des informations, comprenant :
l'obtention (501), par un terminal, des informations de reconnaissance ;
l'envoi (502), par le terminal, d'une demande de requête d'adresse à un serveur selon les informations de reconnaissance, de manière à ce que le serveur détermine les informations d'adresse de livraison correspondant à la demande de requête d'adresse, obtient les informations d'adresse de sortie express du terminal et détermine les informations d'adresse de hiérarchie cible correspondante dans les informations d'adresse de livraison selon les informations d'adresse de sortie express, les informations d'adresse de sortie express étant des informations d'adresse d'une sortie express à laquelle appartient le terminal ; et
la réception (503), par le terminal, des informations d'adresse de hiérarchie cible qui se trouvent dans les informations d'adresse de livraison et qui sont envoyées par le serveur, les informations d'adresse de livraison comprenant au moins deux éléments d'informations d'adresse de hiérarchie.

10. Procédé selon la revendication 9, dans lequel avant l'envoi (502), par le terminal, d'une demande de requête d'adresse à un serveur selon les informations de reconnaissance, le procédé comprend :
l'envoi (601), par le terminal, des informations d'adresse de sortie express au serveur, les informations d'adresse de sortie express étant utilisées pour déterminer les informations d'adresse de hiérarchie cible.

11. Procédé selon la revendication 10, dans lequel l'obtention (501), par un terminal, d'informations de reconnaissance comprend :
la détermination, par le terminal, des informations de reconnaissance selon un identifiant de reconnaissance.

12. Procédé selon la revendication 11, dans lequel l'identifiant de reconnaissance est un code bidimensionnel ou un code à barres.

13. Procédé selon l'une quelconque des revendications 9 à 12, dans lequel les informations de reconnaissance comprennent un localisateur de ressources uniforme d'informations d'utilisateur, des informations de compte de l'utilisateur, un identifiant de transaction de l'utilisateur ou un numéro de reçu de livraison de l'utilisateur.

14. Serveur, comprenant :
un premier module de réception, configuré pour recevoir une demande de requête d'adresse envoyée par un terminal ;
un premier module de détermination (702), configuré pour : déterminer des informations d'adresse de livraison correspondant à la demande de requête d'adresse reçue par le premier module de réception et obtenir des informations d'adresse de sortie express du terminal selon la demande de requête d'adresse reçue par le premier module de réception, les informations d'adresse de livraison comprenant au moins deux éléments des informations d'adresse de hiérarchie et les informations d'adresse de sortie express étant des informations d'adresse d'une sortie express à laquelle appartient le terminal ;
un second module de détermination (703), configuré pour déterminer des informations d'adresse de hiérarchie cible correspondantes dans les informations d'adresse de livraison selon les informations d'adresse de sortie express obtenues par le premier module de détermination ; et
un premier module d'envoi (704), configuré pour envoyer les informations d'adresse de hiérarchie cible obtenues par le second module de détermination au terminal.

15. Terminal, comprenant :
un module d'obtention (805), configuré pour obtenir des informations de reconnaissance ;
un premier module d'envoi (804), configuré pour envoyer une demande de requête d'adresse à un serveur selon les informations de reconnaissance, de manière à ce que le serveur détermine les informations d'adresse de livraison correspondant à la demande de requête d'adresse, obtienne les informations d'adresse de sortie express du terminal et détermine des informations d'adresse de hiérarchie cible correspondantes dans les informations d'adresse de livraison selon les informations d'adresse de sortie express, les informations d'adresse de sortie express étant des informations d'adresse d'une sortie express à laquelle appartient le terminal ; et
un module de réception (801), configuré pour recevoir les informations d'adresse de hiérarchie cible qui se trouvent dans les informations d'adresse de livraison et qui sont envoyées par le serveur, les informations d'adresse de livraison comprenant au moins deux éléments d'informations d'adresse de hiérarchie.
